(19) Europäisches Patentamt

European Patent Office

Office européen des brevets

(11) **EP 1 734 795 A1**

(12) **EUROPEAN PATENT APPLICATION**

(43) Date of publication:
**20.12.2006 Bulletin 2006/51**

(51) Int Cl.:
***H05B 37/02*** (2006.01)

(21) Application number: **05253637.2**

(22) Date of filing: **13.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Sangamo Limited**
**Port Glasgow**
**Renfrewshire PA14 5XG (GB)**

(72) Inventors:
• **Byers, David,**
**c/o Sangamo Limited**
**Port Glasgow,**
**Renfrewshire PA14 5GX (GB)**

• **Addies, Fraser James,**
**c/o Sangamo Limited**
**Port Glasgow,**
**Renfrewshire PA14 5GX (GB)**

(74) Representative: **Gray, John James et al**
**Murgitroyd & Company**
**165-169 Scotland Street**
**Glasgow G5 8PL (GB)**

(54) **Lamp control units**

(57)     A lamp control unit 10 that is programmable to operate in accordance with a user's requirements. The lamp control unit comprises power supply means 12 that provides electrical power for operation of the lamp control unit, lamp actuating means 14 that actuates at least one lamp to which the lamp control unit can be electrically coupled, and a programmable controller 16 that controls the lamp actuating means according to a stored cyclical pattern.

    The cyclical pattern is related to at least one of a sunrise time and a sunset time and is configured for programming of the programmable controller 16 with the cyclical pattern in accordance with the user's requirements. The lamp control unit 10 lacks field operable programming means for programming the programmable controller with the cyclical pattern and the lamp controller is further configured for programming of the programmable controller with the cyclical pattern within a factory environment.

Figure 1

**Description**

The present invention relates to lamp control units, which are programmable to operate in accordance with user requirements, and methods of programming such lamp control units.

Programmable lamp control units have been in use for a long time. Units of early design often use electro-mechanical time clocks. Typically, an electro-mechanical lamp control unit is programmed by a user setting switch points on the time clock. As the time clock rotates movement past the switch points causes a lamp connected to the lamp control unit to switch on and off whereby a cyclical control pattern is executed. By appropriate programming the cyclical control program can be related to sunrise and sunset times.

Advances in sensor technology have provided for lamp control units with ambient light level sensing photo-sensors. The lamp control unit executes a control pattern on the basis of sensed light levels. Such lamp control units need not be user programmable as they operate automatically on the basis of the sensed light levels. However, the photo-sensors of such lamp control units can deteriorate with age. More specifically, a photo-sensor window can become opaque over time, especially when exposed to sunlight, or become obscured with a consequential adverse effect on the sensitivity of the photo-sensor.

Advances in digital electronics have not only provided for more sophisticated programmable lamp control units but have also provided a means by which photo-sensor deterioration has been addressed. More specifically, photo-sensor deterioration has been addressed by dispensing with the photo-sensor and instead storing sunrise and sunset times for different locations in the lamp control unit. Before being put into use at a particular location the lamp control unit is programmed by means of a user selection based on the latitude and longitude of the particular location. Programming is typically accomplished by means of user operable switches, such as push buttons, which a user operates in a predetermined manner to select the desired control pattern. Typically the user operable switches are also used for other programming functions, for example to select a length of pattern cycle, such as a daily or a weekly cycle.

It has been appreciated that lamp control units that rely on user programming on the basis of stored sunrise and sunset times can be difficult to program, i.e. they are not "user-friendly". This is because programming normally involves the operation of several switches according to one of many normally complicated sequences. On some units as many as twelve switches are provided.

A known lamp control unit operates on the basis of sunrise and sunset times. The lamp control unit has two switch keys, which are used to change a current mode of operation and a displayed parameter value with successive depressions of one or other of the switch keys, whereby simpler user programming is achieved.

An aim of the present invention is the provision of a programmable lamp control unit that is "user-friendly" to program.

Another aim of the present invention is the provision of a programmable lamp control unit that executes a cyclical pattern that is related to at least one of a sunrise time and a sunset time and which is "user-friendly" to program.

According to a first aspect of the present invention there is provided a lamp control unit, which is programmable to operate in accordance with a user's requirements, the lamp control unit comprising:

power supply means operable to provide electrical power for operation of the lamp control unit,
lamp actuating means operable to actuate at least one lamp to which the lamp control unit can be electrically coupled, and
a programmable controller operable to control the lamp actuating means according to a stored cyclical pattern, the cyclical pattern being related to at least one of a sunrise time and a sunset time, the lamp control unit being configured for programming of the programmable controller with the cyclical pattern in accordance with the user's requirements, in which the lamp control unit lacks field operable programming means for programming the programmable controller with the cyclical pattern and the lamp controller is further configured for programming of the programmable controller with the cyclical pattern within a factory environment.

In accordance with the invention there may be no requirement for programming of the programmable controller by the user in the field.

A user can specify his requirements for operation of the lamp control unit and the specified requirements can be used to program the programmable controller with a corresponding cyclical pattern within the factory environment. The requirements for operation might, for example, be specified in terms of the latitude and longitude of operation of the lamp control unit and other functions, such as the length of pattern cycle. Thus, the present invention represents a radical departure from the established developmental path followed by conventional lamp control units of programming by the user in the field by means of user operable switches.

The term factory environment as used herein is intended to cover a factory of manufacture of the lamp control unit, a factory of assembly of the lamp control unit, a distribution centre, e.g. of an importer of a foreign manufactured lamp control unit, and the like.

Thus, the lamp control unit may comprise programming means in data communication with the programmable controller, the programming means being configured to receive programming data corresponding to the cyclical pattern to be stored in the programmable controller.

More specifically, the programming means may comprise a plurality of electrical connections accessible in the factory environment.

More specifically, where electrical circuitry of the lamp control unit comprises a printed circuit board the plurality of electrical connections may be constituted as respective solder connections on the printed circuit board.

In use, the user specified requirements can be formed as programming data that is conveyed via the programming means for storage as the cyclical pattern in the lamp control unit. This form of the invention can be useful for programming of lamp control units during manufacture or assembly. More specifically, the lamp control unit can be programmed by bringing the printed circuit board into engagement with a so-called bed of nails by mean of which the programming data can be conveyed for storage as the cyclical pattern.

Alternatively or in addition, the programming means may comprise a programming port in data communication with the programmable controller, the programming port being configured to receive programming data corresponding to the cyclical pattern to be stored in the programmable controller.

More specifically, the programming port may comprise a serial data communications port, such as an RS-232 port.

In use, the user specified requirements can be formed as programming data that is conveyed via the programming port for storage as the cyclical pattern in the lamp control unit. This form of the invention can be useful for programming of lamp control units that have been manufactured abroad and are programmed after importation, e.g. at a distribution centre.

Alternatively or in addition, the programmable controller may be configured to control the lamp actuating means solely in dependence upon the stored cyclical pattern.

Alternatively or in addition, the lamp control means may comprise field test means configured to allow a user to test the operation of the lamp control unit.

More specifically, the field test means may be configured to allow a user to initiate execution of the stored cyclical test pattern by the lamp control unit.

Alternatively or in addition, the field test means may be a sole means of control of the lamp control unit by a user in the field.

Alternatively or in addition, the field test means may comprise a user operable switch, such as a pushbutton.

Alternatively or in addition, the programmable controller may be configured to be solely programmable within a factory environment.

Alternatively or in addition, the lamp control unit may comprise a data store for storing the cyclical pattern.

More specifically, the data store may comprise an electrically programmable read-only memory.

Alternatively or in addition, the data store may comprise a re-programmable data store, such as an electrically erasable programmable read-only memory. Thus, the lamp control unit may be re-programmed in accordance with a change in user requirements.

Alternatively or in addition, the programmable controller may be programmable with the cyclical pattern on the basis of a latitude and longitude of intended operation of the lamp control unit.

Alternatively or in addition, the lamp control unit may be configured such that operation of the programmable controller according to the stored cyclical pattern is in dependence upon a time variation of at least one of a sunrise time and a sunset time over a predetermined time period, e.g. a year.

More specifically, the lamp control unit may be configured to store a plurality of times of at least one of sunrise times and sunset times, the plurality of times corresponding to times on different respective days during the predetermined time period.

More specifically, the plurality of times may be stored in the form of a look-up-table.

Alternatively or in addition, the programmable controller may be programmable to provide for a variation in a time of control of the lamp actuating means, the time of control being related to the at least one of the sunrise time and the sunset time. For example, the time of control of the lamp actuating means might be changeable between being substantially coincidental with the sunrise time and variable up to one hour before the sunrise time. Furthermore, the time of control of the lamp actuating means might be changeable to provide for switching off at a predetermined time during the night, switching on again subsequently and then switching off at dawn.

Alternatively or in addition, the programmable controller may be programmable to provide for a variation in a level of a signal provided by the lamp actuating means for actuation of the at least one lamp coupled to the lamp control unit. In use, variation in the level of the signal can be used to vary a brightness of the at least one lamp.

More specifically, the programmable controller may be configured to vary the level of the signal during execution of the cyclical pattern. Thus, for example, the at least one lamp may be dimmed at an appropriate time between sunset and sunrise, such as at a time when there is less need for bright lighting.

Alternatively or in addition, the programmable controller may be programmable for different lengths of cyclical pattern. Thus, the stored cyclical pattern might, for example, be of a week, a month or a year in length.

Alternatively or in addition, the lamp control unit may comprise a microprocessor which constitutes the programmable controller at least in part.

Alternatively or in addition, the power supply means may be operable on mains electricity.

More specifically, the lamp control unit may further comprise battery back-up means. Thus, power supply to the lamp control unit can be maintained in the event of a mains power failure.

Alternatively or in addition, the lamp control means may comprise at least one relay operable to provide switched actuation of the at least one lamp.

Alternatively or in addition, the lamp control unit may comprise clock means operable with the programmable controller to execute the cyclical pattern.

More specifically, the lamp control unit may comprise a temperature sensor, e.g. a thermocouple, configured to measure an ambient temperature and the clock means may be configured to provide a time output in dependence upon a measured ambient temperature.

More specifically, the lamp control unit may be configured to correct the time output of the clock means in dependence upon a predetermined variation in an output of the clock means over temperature and a change in ambient temperature.

More specifically, the lamp control unit may be configured to repeatedly measure the ambient temperature until at least a predetermined time error has been reached before the time output of the clock is corrected. For example, the predetermined time error might be one second.

In a form of the invention, the lamp control unit may further comprise a DIN connection though which the lamp actuating means can actuate the at least one lamp.

In a further form of the invention the lamp control unit may further comprise a National Electrical Manufacturers Association (NEMA) connection though which the lamp actuating means can actuate the at least one lamp. According to this form of the invention the lamp control unit may be connected to a NEMA connection on one of a street lamp and a lantern. This can provide for retrofitting of a lamp unit according to the invention to an existing street lamp or lantern.

Thus, according to a second aspect of the present invention there is provide a lighting system comprising a lamp control unit according to the first aspect of the present invention.

More specifically, the lighting system may comprise a street lamp.

Alternatively or in addition, lighting system may comprise a lantern.

According to a third aspect of the present invention there is provided a method of programming a lamp control unit in accordance with a user's requirements, the lamp control unit comprising power supply means operable to provide electrical power for operation of the lamp control unit, lamp actuating means operable for actuation of at least one lamp to which the lamp control unit can be electrically coupled and a programmable controller operable to control the lamp actuating means according to a stored cyclical pattern, which is related to at least one of a sunrise time and a sunset time, the method comprising programming the programmable controller with the cyclical pattern in accordance with the user's requirements, in which the lamp control unit lacks field operable programming means for programming the programmable controller with the cyclical pattern and the lamp controller is further configured such that the step of programming of the programmable controller is carried out within a factory environment.

Embodiments of the third aspect of the present invention may comprise one or more features according to the first aspect of the present invention.

The present applicant has realised that the use of a temperature sensor to correct a time clock has wider application than has been hitherto described.

Thus, according to a fourth aspect of the present invention there is provided a lamp control unit, which is programmable to operate in accordance with a user's requirements, the lamp control unit comprising:

    power supply means operable to provide electrical power for operation of the lamp control unit,
    lamp actuating means operable for actuation of at least one lamp to which the lamp control unit can be electrically coupled, and
    a programmable controller operable to control the lamp actuating means according to a stored cyclical pattern, the cyclical pattern being related to at least one of a sunrise time and a sunset time, the lamp control unit being configured for programming of the programmable controller with the cyclical pattern in accordance with the user's requirements, in which the lamp control unit comprises clock means operable with the programmable controller to execute the cyclical pattern and a temperature sensor configured to measure an ambient temperature, the clock means being configured to provide a time output in dependence upon a measured ambient temperature.

More specifically, the lamp control unit may lack field operable programming means for programming the programmable controller with the cyclical pattern and the lamp controller may be further configured for programming of the programmable controller with the cyclical pattern within a factory environment.

Embodiments of the fourth aspect of the present invention may comprise one or more features according to the first aspect of the present invention.

According to a further aspect of the present invention there is provided a control unit, which is programmable to operate in accordance with a user's requirements, the control unit comprising:

power supply means operable to provide electrical power for operation of the control unit,
actuating means operable to actuate at least one device to which the control unit can be electrically coupled, and
a programmable controller operable to control the actuating means according to a stored cyclical pattern, the cyclical pattern being related to at least one of a sunrise time and a sunset time, the control unit being configured for programming of the programmable controller with the cyclical pattern in accordance with the user's requirements, in which the control unit lacks field operable programming means for programming the programmable controller with the cyclical pattern and the controller is further configured for programming of the programmable controller with the cyclical pattern within a factory environment.

More specifically, control unit may comprise a lamp control unit.

Alternatively or in addition, the actuating means may comprise lamp actuating means.

Embodiments of the further aspect of the present invention may comprise one or more features according to the first aspect of the present invention.

Specific embodiments of the present invention will now be described with reference to the accompanying drawings, in which:

Figure 1 is a block diagram representation of the principal components of the present invention;
Figure 2 is circuit schematic for an embodiment of the present invention;
Figures 3a and 3b are a front view and a side view respectively of a first form of the invention; and
Figure 4 is a perspective view of a second form of the invention.

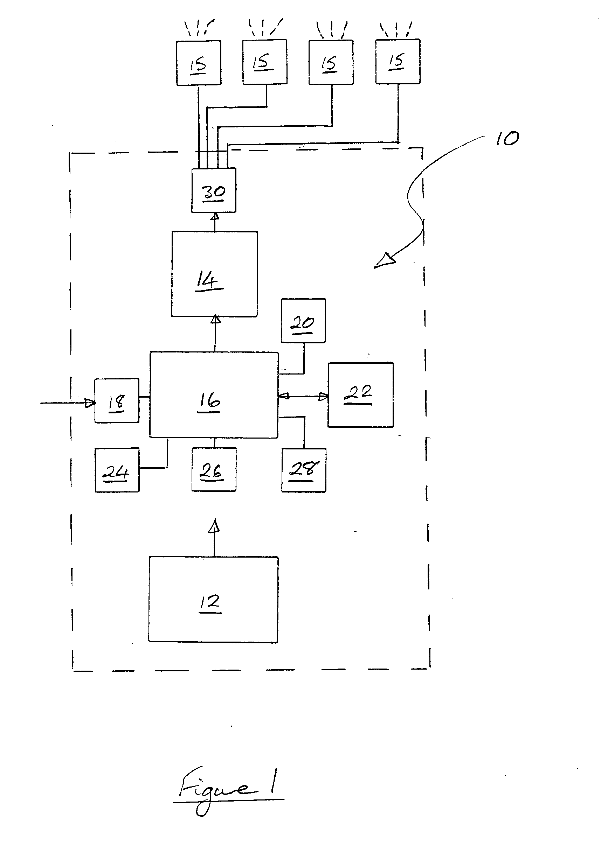

In the block diagram representation of the lamp control unit 10 of the invention that is shown in Figure 1, a mains operable power supply 12 provides electrical power for operation of the unit 10. The unit 10 also comprises a lamp actuating means 14 having a number of relays for switched actuation of four lamps 15 that are electrically coupled to the actuating means. In applications of the invention, e.g. with a street lamp, there may, of course be only one lamp 15 actuated by the actuating means 14. In addition, the lamp control unit 10 has a microprocessor 16 (which constitutes a programmable controller), an RS-232 port 18 (which constitutes programming means), a user operable pushbutton 20 (which constitutes a field test means) and an EEPROM 22 (which constitutes a data store). Furthermore, the lamp control unit 10 comprises a battery back up 24, a real time clock 26 (which constitutes clock means), a temperature sensor 28 and a NEMA connection 30. Alternatively, a DIN connection 30 may be provided instead of the NEMA connection.

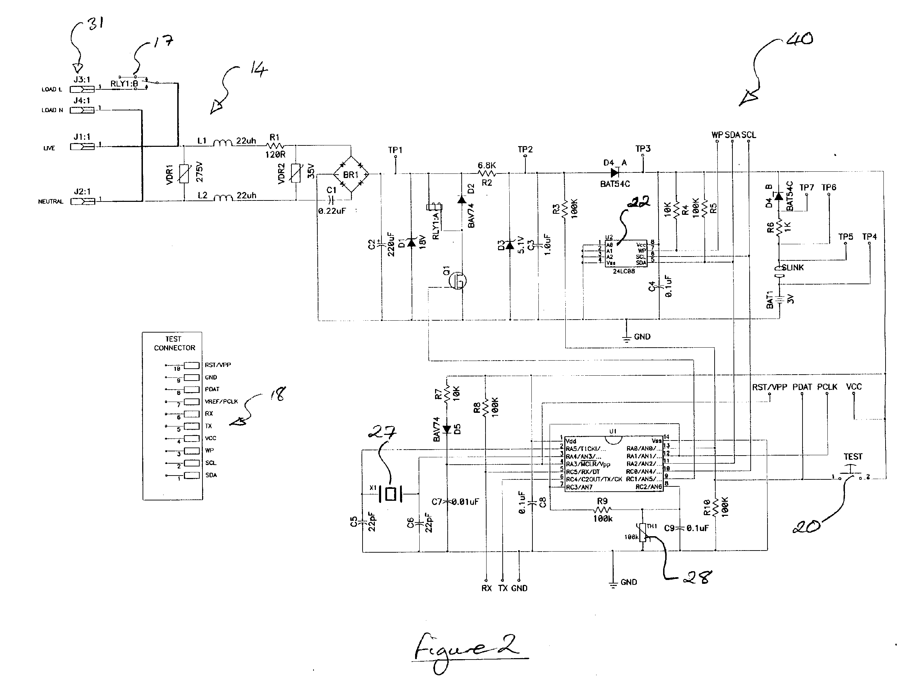

Turning now to Figure 2 a circuit schematic 40 for an embodiment of the lamp control unit of Figure 1 is shown. Electrical components corresponding to the components of Figure 1 as designated by the same reference numerals. More specifically, the circuit 40 comprises actuating means 14, having a relay 17, a microprocessor 16, an RS-232 port 18, a user-operable test button 20 and an EEPROM 22. In addition, the circuit 40 comprises a crystal 27, which along with its associated circuitry constitutes a real time clock, a temperature sensor 28 and a connector 31, which may be constituted as a NEMA or DIN connection.

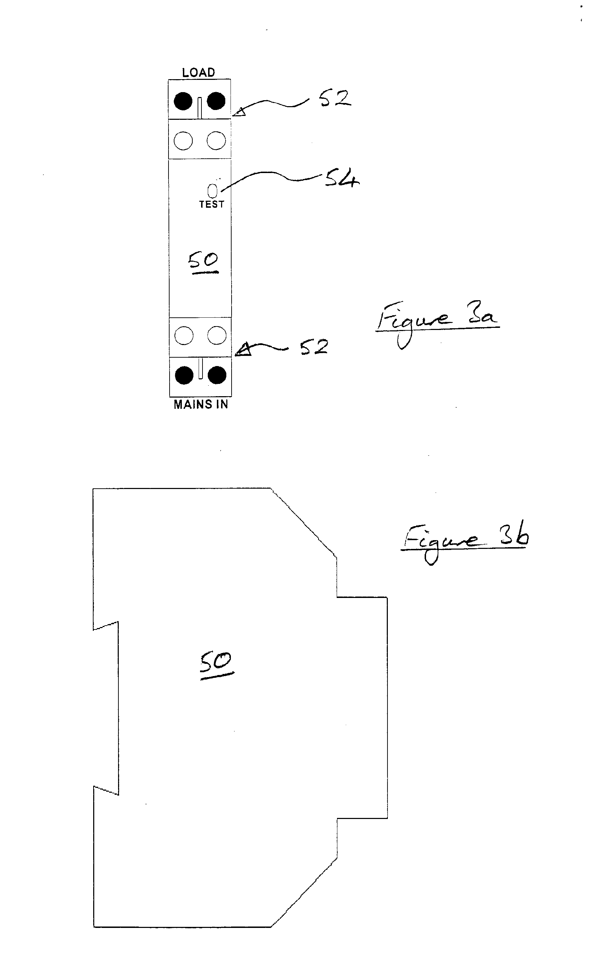

Figures 3a and 3b show the DIN connection 50 version of the lamp controller of Figures 1 and 2. More specifically, Figure 3a is a front view and Figure 3b is a side view of the DIN connection version. The DIN connection points 52 and the user-operable test button 54 are shown in Figure 3a. The DIN connection version can be used where a lighting system has a corresponding DIN connection facility.

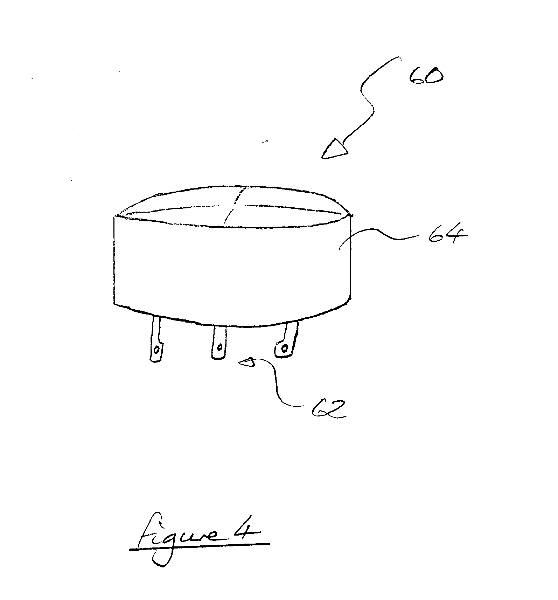

Figure 4 provides a perspective view of the NEMA connection 60 version of the lamp controller of Figures 1 and 2. The NEMA connection points 62 are provided on the underneath of the unit. The housing 64 of the NEMA connection 60 version is of a plastics material that is UV stable. The NEMA connection version 60 meets IP65 requirements. The NEMA connection version 60 has no user-operable test button because this particular unit is to be secured to an upper part of a street lamp, and will thus be out of reach when in use.

Programming and operation of the lamp control unit of the present invention will now be described with reference to Figures 1 to 4.

A user of the lamp control unit 10, 50, 60 provides a location for operation of the unit in the field in terms of latitude and longitude, along with other functional requirements. Such functional requirements might include a length of the cyclical pattern to be executed by the unit (e.g. a week), the relationship between lamp switch on/off times in relation to sunset/sunrise times (e.g. one hour before sunset), lamp brightness variation during execution of a cyclical pattern.

The user requirements are provided to the factory of manufacture or assembly or perhaps to a distribution centre, where they are converted into programming data in readiness for programming the lamp control unit.

Where the programming location is a factory of manufacture or assembly a printed circuit board on which the circuit of Figure 2 is provided is brought into engagement with a bed of nails through which the programming data is conveyed for storage in the EEPROM 22 as a cyclical pattern. Alternatively, where the programming location is a distribution centre the programming data is conveyed for storage in the EEPROM 22 as a cyclical pattern via the RS-232 port 18. This completes the programming phase.

The lamp control unit 10, 50, 60 is then installed in the field, e.g. on a street lamp or on a bollard. In the case of the DIN version shown in Figures 3a and 3b the user can test the lamp control unit by pressing the user operable push button 20, 54. This causes the lamp control unit to execute a part of the stored cyclical pattern or a simple test sequence to test operation of the lamp or lamps actuated by the lamp control unit.

In operation, the microprocessor 16 executes a firmware program to execute the cyclical pattern stored in the EEPROM 22. Execution of the cyclical pattern causes the microprocessor to control the lamp actuating means 14, which in turn actuates the lamp or lamps connected to the lamp control unit. More specifically, the relay or relays 17 of the actuating means 14 switch the lamp(s) on and off in accordance with the cyclical pattern determined by the user. Lamp brightness is likewise controlled by the microprocessor. However, it should be noted that the circuit of Figure 2 lacks the feature of lamp brightness control. Nevertheless, this feature can be readily provided by the inclusion of a further output from the microprocessor. The further output is controlled by a modified firmware routine to provide a variable voltage control (e.g. 2 to 10 volts) to vary the brightness of a lamp. This modification to the circuit of Figure 2 is readily within the ordinary design capabilities of the skilled reader.

In the event of mains power failure the battery back up provides emergency power to reduce the likelihood of loss of data stored in the lamp control unit.

The real time clock 26 provides timing for operation of the microprocessor 16 and thereby for timed execution of the stored cyclical pattern. The temperature sensor 28 is used by the microprocessor to measure the ambient temperature and to correct a known drift in time clock frequency_with temperature.

Details of the firmware used in programming and operation of the lamp control unit are provided in Annex A. Although the firmware of Annex A does not contain a program for the variation in the time of control of the lamp actuating means it would be readily apparent to the person of ordinary skill in the art to create an addition to the firmware platform of Annex A to implement this function.

<u>ANNEX A</u>

**Firmware Design**

**Introduction**

This document describes in detail the design and functionality of the firmware. The document uses BS6224 design notation to describe program flow.

**1 - Main Program**

The main program operates as a simple multitasking system, each task executing in turn in a "round-robin" basis. A one second RTC and an RS232 RX interrupt routines pace the execution of some of these tasks.

```
(Start)
 |
 |--( Init H/W )                    (2)
 |
 |--( Do frequency test )          (3)
 |
 |--( Init S/W )                   (4)
 |
 |--| REPEAT FOREVER |
 |  |   |
 |  |   |--( Read ADC )            (5)
 |  |   |
 |  |   |--( Correct RTC )         (6)
 |  |   |
 |  |   |--( Get Solar Times )     (7)
 |  |   |
 |  |   |--( Drive Relays )        (8)
 |  |   |
 |  |   |--( Scan Test Button )    (9)
 |  |   |
 |  |   |--( Do Comms )            (10)
 |  |   |
 |      --
 |
(End)
```

## 2 - Init H/W

Various registers in the PIC are set up to provide the required functionality, these are now described in detail.

### Port A

The bits of port A are allocated as follows:

| Port A Data Register (0x05) | | | | | | | |
|---|---|---|---|---|---|---|---|
| **7** | **6** | **5** | **4** | **3** | **2** | **1** | **0** |
| n/c | n/c | n/c | n/c | n/c | i2c SDA | ADC Reference | Test Button and PF |

| Port A Direction Register (0x85) | | | | | | | |
|---|---|---|---|---|---|---|---|
| **7** | **6** | **5** | **4** | **3** | **2** | **1** | **0** |
| 1 | 1 | 1 | 1 | 1 | 0 | 1 | 1 |

Note that bit 2 of Port A requires the weak pull up function to be enabled, this requires the following operations:

1. General WPU enable bit be cleared, bit 7 of Option Reg (0x??)
2. Port A, bit 0 WPU enable be cleared, bit 0 of WPUA (0x??)
3. Port A, bit 1 WPU enable be cleared, bit 1 of WPUA (0x??)
4. Port A, bit 2 WPU enable be set, bit 2 of WPUA (0x??)

Note that the default setting for the WPUA register is pull-ups enabled, hence the important step above is to disable the pull-up on bit 0 and 1.

*Port C*

The bits of port C are allocated as follows:

| Port C Data Register (0x??) | | | | | | | |
|---|---|---|---|---|---|---|---|
| 7 | 6 | 5 | 4 | 3 | 2 | 1 | 0 |
| n/c | n/c | RS232 RX | RS232 TX | Thermo Enable | Thermo Input | Relay Control | i2c SCL |

| Port A Direction Register (0x??) | | | | | | | |
|---|---|---|---|---|---|---|---|
| 7 | 6 | 5 | 4 | 3 | 2 | 1 | 0 |
| 1 | 1 | 1 | 1 | 1 | 1 | 0 | 0 |

Note the following:

1. Port C bit 4 is initially configured as an input, when the UART module is enabled it is automatically re-configured as an output.
2. Port C bit 3 is initially configured as an input to conserve battery power; once per minute the bit is re-configured as an output for a short period of time to enable the thermistor such that a temperature measurement can be made.

*ADC*

Port A bit 0 and port C bit 2 are configured as an analog inputs, these map onto channel 0 and 6 respectively of the ADC multiplexer. The registers associated with the ADC are set up as follows:

| ADC ANSEL Register (0x91) | | | | | | | |
|---|---|---|---|---|---|---|---|
| 7 | 6 | 5 | 4 | 3 | 2 | 1 | 0 |
| AN7 (RC3) | AN6 (RC2) | AN5 (RC1) | AN4 (RC0) | AN3 (RA4) | AN2 (RA2) | AN1 (RA1) | AN0 (RA0) |
| 0 | 1 | 0 | 0 | 0 | 0 | 0 | 1 |
| Specify which input bits are analog | | | | | | | |

| ADC ADCON0 Register (0x1F) | | | | | | | |
|---|---|---|---|---|---|---|---|
| 6 | 7 | 5 | 4 | 3 | 2 | 1 | 0 |
| ADFMT | VREF | X | CHSEL2 | CHSEL1 | CHSEL0 | GO/DONE | ADON |
| 0 | 0 | 0 | 0 | 0 | 0 | 0 | 0 |
| Initially:<br>ADC OFF<br>ADC Done<br>Select channel 0<br>External voltage ref<br>Use upper 8 bits only | | | | | | | |

| ADC ADCON1 Register (0x9F) | | | | | | | |
|---|---|---|---|---|---|---|---|
| 7 | 6 | 5 | 4 | 3 | 2 | 1 | 0 |
| X | ADCLK2 | ADCLK1 | ADCLK0 | X | X | X | X |

(continued)

| ADC ADCON1 Register (0x9F) | | | | | | | |
|---|---|---|---|---|---|---|---|
| **7** | **6** | **5** | **4** | **3** | **2** | **1** | **0** |
| 0 | 0 | 1 | 1 | 0 | 0 | 0 | 0 |
| Use internal oscillator to clock ADC | | | | | | | |

## Comparator Module

To ensure correct operation of some of the pins as digital inputs the comparator function must be disabled.

| CMCONO Register (0x??) | | | | | | | |
|---|---|---|---|---|---|---|---|
| **7** | **6** | **5** | **4** | **3** | **2** | **1** | **0** |
|  |  |  |  |  |  |  |  |
| 0 | 0 | 0 | 0 | 0 | 1 | 1 | 1 |

## TIMER 0

Timer 0 is configured to provide an interrupt at one second intervals; this is used to implement the Real Time Clock function.

The system clock, which is at a frequency of Fosc/4, is passed to the timer 0 counter via a 1:32 prescaler, the counter is 8 bits long and rolls over (generating an interrupt) after 256 counts. The resulting division rate is 4 * 32 * 256 = 32768, hence with a 32768Hz crystal fitted this generates an interrupt at one second intervals.

The prescaler is set to a 1:32 ratio by configuring bits 2..0 of the Option Reg; the timer count register is cleared to zero.

| Option Register (0x??) | | | | | | | |
|---|---|---|---|---|---|---|---|
| 7 | 6 | 5 | 4 | 3 | 2 | 1 | 0 |
|  |  |  |  |  | PS2 | PS2 | PS0 |
|  |  |  |  |  | 1 | 0 | 0 |

| Timer 0 Register (0x??) | | | | | | | |
|---|---|---|---|---|---|---|---|
| 7 | 6 | 5 | 4 | 3 | 2 | 1 | 0 |
| 0 | 0 | 0 | 0 | 0 | 0 | 0 | 0 |

Note that the Timer 0 interrupt enable and the global interrupt enable must be set before the RTC will start to function, see section 4 below.

## Baud Rate Generator and UART

As the microcontroller is fitted with a low frequency crystal (32kHz) a low baud rate (in this case 300) must be used for the RS232 interface. The baud rate is set by configuring a pair of registers (SPBRGH:SPBRG) in the baud rate generator module: the following formula is used to calculate the correct values that must be allocated to these registers.

$$\text{SPBRGH:SPBRG} \quad = \text{INT}((Fosc/(4 * \text{baud})) - 1)$$
$$= \text{INT}((32768/(4 * 300)) - 1)$$
$$= \text{INT}(26.307)$$
$$= 26$$

For correct operation the baud rate generator must be in 16 bit mode with "baud rate hiah" enabled.

Note that as the RS232 module consumes a significant amount of power when it is operating it is only enabled for short periods of time as required by factory set up. The module is enabled by pressing the test button and will remain operational for 5 minutes.

**3 - Do Frequency Test**

The 32768Hz crystal fitted to the product will (typically) have an initial accuracy of +/-20ppm. During production this frequency will be measured and the offset from the ideal value determined. This offset will be programmed into the product such that the RTC algorithm can self correct. The 32768Hz frequency cannot be measured directly without causing a frequency error hence it is necessary to measure it indirectly by forcing the software to execute a loop that toggles one of the I/O pins; the frequency on this pin will allow the initial offset to be determined.

The software will execute a loop that effectively divides the 32768 frequency by 16 resulting in a test frequency of 2048Hz. Frequency test mode is enabled by holding the test button during a reset; to terminate the test mode another reset is required.

A 1ppm error in a frequency of 2048Hz will result in an off set of 0.002048Hz.

e.g.

- Measured test frequency = 2048.034Hz.
- Error from ideal frequency = 2048.034 - 2048.000 = 0.034Hz
- ppm error = 0.034/0.002 = 17ppm

The RTC correction algorithm is designed to accumulate the number of milliseconds error per hour either from the initial frequency error or from the effects of temperature.

1ppm/hr = 3.6ms/hr.

$$\text{hence} \quad \text{crystal\_error} = \text{INT}((\text{measured frequency} - 2048)/0.002048) * 3.6$$

$$\text{crystal\_error} = 1758 * (Fx-2048)$$

NOTE: It is important that the frequency meter used to perform the measurement described above has an accuracy of 0.1 ppm or better.

To avoid the need for close tracking of products during manufacture, the crystal offset will be programmed into the microcontrollers internal EEPROM. This will avoid the potential problem of loss of crystal calibration if the product suffers a reset after test. See Appendix 4 below.

**4 - Init S/W**

The software is initialized as follows:

1. RTC variables are assigned default values. Correct values will be set via the RS232 comms interface.

2. The "baseline" and "range" values for the solar time look-up tables are read from the external EEPROM.

3. The RTC correction variables are reset.

4. A flag is set indicate that the current solar times (based on the default date) should be read from the external EEPROM.

5. The RTC and global interrupt enable flags are set.

**5 - Read ADC**

At one minute intervals the ADC is used to measure the voltage developed across the temperature sensor. The value read is accumulated over a period of one hour (in a variable called "adcsum") such that an average value can be determined; the variable "adcount" is used to determine how many measurements have been performed (this will always be 60 except after a reset when a partial hour must be catered for).
Note that to conserve battery power both the ADC module in the microcontroller and the external thermistor are disabled until an ADC reading is to be performed.
Note that the ADC is actually a 10 bit device but is configured such that the 8 most significant bits can be read from the ADRESH register.

```
           (Start)
              |
              |
              |--| IF one minute elapsed |
              |   |
              |   < >------| ADC module ON |
              |   |    |
              |   |    |--| Enable thermistor |
              |   |    |
              |   |    |--| ad_res = ADRESH |
              |   |    |
              |   |    |--| adcsum += ad_res |
              |   |    |
              |   |    |--| Disable thermistor |
              |   |    |
              |   |    |--| ADC module OFF |
              |   |    |
              |   |    --| adcount++ |
              |   |
              |      --| NULL |
              |
           (Stop)
```

**6 - Correct RTC**

The RTC will suffer from three types of error.

- Initial frequency offset due to crystal tolerance (typically +/-20ppm)
- Drift in crystal frequency due to ambient temperature (-0.04ppm/C$^2$)
- Drift in crystal frequency due to ageing (+/-3ppm/year)

**Only the first two types of error can realistically be compensated for.**
The initial frequency offset will be determined during manufacture and the error programmed into the product, see above. The second type of error can be determined by measuring the ambient temperature at regular intervals an accumulating an error value over a period of time.
The results from the internal ADC are averaged over a one hour period and the result used to determine the ppm error for that hour. As this error value will be a fraction of a second (typically ~200ms worst case) it will be necessary to accumulate the error value until at least one seconds worth of correction is required.
A look-up table is used to convert average temperature to error values, to avoid the need for floating point arithmetic. Note that it will not be necessary to actually determine the temperature in degrees C, a normalized version of the average ADC result value (with appropriate bound checking) is used as an index into the table. The table contents are derived from the temperature/resistance characteristics of the thermistor fitted to the product.

```
(Start)
 |
 |
 |--| IF one hour elapsed |
 |   |   |
 |   < >-----| adcaverage = adcsum / adcount |
 |   |   |
 |   |   |--( Bound check the average value )          (6.1)
 |   |   |
 |   |   |--( Normalise the bounded average value )    (6.2)
 |   |   |
 |   |   |--( Read millsecond error from table )       (6.3)
 |   |   |
 |   |   |--( Add initial crystal error )              (6.4)
 |   |   |
 |   |    --( Determine if RTC correction is required ) (6.5)
 |   |
 |    --| Null |
 |
(Stop)
```

### 6.1 - Bound check the average value

The product specification calls for operation over the temperature range -10C to +50C. If for any reason the average ADC value represents a temperature outwith this range then the value is bounded to the upper or lower value of the allowable range. This prevents an attempt to access correction values outside the look-up table.

```
(Start)
 |
 |--| IF adcaverage < TABLE_LOW |
 |   |   |
 |   < >--| adcaverage = TABLE_LOW |
 |   |
 |    --| IF adcaverage > TABLE_HIGH |
 |       |
 |       < >--| adcaverage = TABLE_HIGH |
 |          |
 |           --| NULL |



                    |
                 (Stop)
```

### 6.2 - Normalise the bounded average value

The average ADC value, although an 8 bit number, will have been bounded as described above. Typically it will only take on about 160 different values out of a possible 256, hence code space can be saved by limiting the look-up table to the shorter length. Such that the average ADC value can then be used as an index into this table it must be normalized as follows:

$$adcaverage = TABLE\_HIGH - adcaverage$$

This results in values that range from 0 to TABLE_HIGH and can hence be used as indices into the look-up table.

### 6.3 - Read millsecond error from table

After the average ADC value has been bounded and normalized as described above it is used to obtain a millisecond error value from the look-up table. This error value is accumulated until more than 1000ms error have occurred.

$$\texttt{ms\_error += mserrortable[adcaverage]}$$

Note that the convention adopted is that temperature related frequency errors will result in a positive value of error even although the error will always cause the clock to go slow (except at the standard temperature of 25C where the error is always zero).

### 6.4 - Add initial crystal error

The initial crystal error will have been determined during factory test and programmed into the product. This value will typically be in the range +/-72ms/hr for a 20ppm crystal. Note that this error can cause the clock to go slow OR fast, unlike temperature effects which only cause the clock to so slow.

As the convention adopted is that temperature effect are accumulated as +ve values of millisecond error then the initial crystal error must be subtracted from the accumulated value.

$$\texttt{ms\_error = ms\_error - crystal\_error}$$

### 6.4 - Determine if RTC correction is required

Depending on the average operating temperature and the initial crystal error then the variable "ms_error" will eventually accumulate to +/-1000ms; when this happens the RTC requires to be corrected by +/-1 second. The residue of the 1000ms is retained as the starting value for the next error accumulation.

```
                  (Start)
                     |
                     |--| IF ms_error > 1000 |
                     |    |
                     |    < >-----| secs_correct = 1 |
                     |    |    |
                     |    |      --| ms_error -= 1000 |
                     |    |
                     |    --| IF ms_error < -1000 |
                     |         |
                     |         < >-----| secs_correct = -1 |
                     |         |    |
                     |         |      --| ms_error += 1000 |
                     |         |
                     |          --| NULL |
                     |
                  (Stop)
```

### 6.5 - Derivation of Look-Up Table

The 100k/25C NTC thermistor used to measure the temperature is part of a ratiometric network where the voltage developed across the device is measured with the ADC.

A typical table of temperatures, resistances, ADC readings and millsecond error are shown below; note that this illustrative table only shows values every 2 degrees whereas the actual look-up table will have a millisecond error value for each possible ADC value in the range 72 to 211.

| Average Temperature | Resistance | ADC reading | Millisecond error per hour |
|---|---|---|---|
| 50 | 39266 | 72 | 90 |
| 48 | 42305 | 76 | 76 |
| 46 | 45344 | 80 | 64 |
| 44 | 48731 | 84 | 52 |
| 42 | 52466 | 88 | 42 |
| 40 | 56201 | 92 | 32 |
| 38 | 60817 | 96 | 24 |
| 36 | 65434 | 101 | 17 |
| 34 | 70610 | 106 | 12 |
| 32 | 76345 | 110 | 7 |
| 30 | 82081 | 115 | 4 |
| 28 | 89249 | 120 | 1 |
| 26 | 96416 | 125 | 0 |
| 24 | 104504 | 130 | 0 |
| 22 | 113513 | 136 | 1 |
| 20 | 122522 | 140 | 4 |
| 18 | 133915 | 146 | 7 |
| 16 | 145308 | 151 | 12 |
| 14 | 158253 | 156 | 17 |
| 12 | 172751 | 162 | 24 |
| 10 | 187249 | 166 | 32 |
| 8 | 205820 | 172 | 42 |
| 6 | 224391 | 176 | 52 |
| 4 | 245652 | 181 | 64 |
| 2 | 269603 | 186 | 76 |
| 0 | 293554 | 190 | 90 |
| -2 | 324660 | 195 | 105 |
| -4 | 355767 | 199 | 121 |
| -6 | 391668 | 203 | 138 |
| -8 | 432365 | 207 | 157 |
| -10 | 473061 | 211 | 176 |

**7 - Get Solar Times**

The product will have a table of times pre-programmed into an EEPROM device from which a pair of times will be extracted on a daily basis. This technique ensure that a low cost, small memory, microcontroller can be used. However it does require that the final destination of the product be known at time of manufacture (or final programming).

*7.1 - Geographical Extent*

The product has been designed to operate within the "rectangle" shown below. This "rectangle", although straddling a geographical timezone boundary uses the GMT or London timezone throughout its extent.

| | |
|---|---|
| Shetland | - 61N |
| South of England | -50N |
| East England | - 2E (+2) |
| West of Ireland | - 10W (-10) |

The solar calculator software will be utilized to generate (on an as required basis) a set of tables of sunrise (soft) and sunset (sont) times using the geographical location of the client and his/her AON/LOF requirements as parameters.

Note that the solar times (sont and soft) are defined as the number of minutes from midnight to the event.

### 7.2 - EEPROM memory requirements and table encoding

If the slight complication of leap years is initially ignored then a total of 365*2 **word** values are required to represent the solar time table, this is a total of 1460 bytes. As the low cost EEPROM chosen for the product has only 1024 bytes available an encoding scheme is required that will allow this limited memory device to be used. The encoding scheme allocates a byte value for each sont and soft time an utilizes a number of additional parameters that allows the equivalent word value to be calculated.

Taking Glasgow as an example the soft times are in the range 208 to 527 minutes from midnight. If a fixed "baseline" of 208 minutes (the minimum soft value) is defined then the soft times can be represented as an offset from this value, i.e. 0 to 319 minutes. Note that not all of these derived values can be represented as byte values, during the winter months the value is numerically larger than 255. To cater for these values a pair of "range" parameters are defined which define a period where a baseline of 208+255 rather than 208 should be used.

SOFT (sunrise)

208 ÷ 255

baseline = 208

day 1    range 1    range 2    day 365

In region "range 1" to "range 2" a baseline value of 208 is added to the byte value obtained from the EEPROM.

In the regions "day 1" to "range 1" and "range 2" to "day 365" a baseline value of 208+255 is added to the byte value obtained from the EEPROM.

A similar method is used for the sont values, see diagram:

SONT (sunset)

952 ÷ 255

baseline = 952

day 1    range 1    range 2    day 365

In region "range 1" to "range 2" a baseline value of 952+255 is added to the byte value obtained from the EEPROM.

In the regions "day 1" to "range 1" and "range 2" to "day 365" a baseline value of 952 is added to the byte value obtained from the EEPROM.

NOTE that the "baseline" and "range" values for sont and soft will be different and will, in general be word values. A total of 6 word values will be required over and above the 365*2 bytes values; this results in a grand total of 742 bytes required for the table. This easily fits within the 1024 bytes available.

### 7.3 - Calculate SONT and SOFT values

```
(Start)
 |
 |--| IF midnight |
 |     |
 |   < >-----(Read SONT and SOFT offset from EEPROM )        (7.4)
 |     |   |
 |     |   |--| soft = softbaseline + eeprom_soft |
 |     |   |
 |     |   |--| IF (day <= softrange1) OR (day > softrange2) |
 |     |   |     |
 |     |   |   < >--| soft += 255 |
 |     |   |         |
 |     |   |        --| NULL |
 |     |   |
 |     |   |--| sont = sontbaseline + eeprom_sont |
 |     |   |
 |     |    --| IF (day > sontrange1) OR (day <= sontrange2) |
 |     |         |
 |     |       < >--| soft += 255 |
 |     |             |
 |     |            --| NULL |
 |     |
 |      -| NULL |
 |
(Stop)
```

### 7.4 — Read SONT and SOFT offsets from EEPROM

The microcontroller uses an industry standard I2C bus to communicate with the external EEPROM. Note that the software always obtains a pair of bytes from the EEPROM, this simplifies the reading of "baseline" and "range" words or pairs of sont/soft offset bytes.
The address in the EEPROM where the sont and soft offsets are stored is derived as follows:

$$address = (daynumber - 1) * 2$$

This will access each even numbered address starting at zero.
The EEPROM device is organized as 4 blocks of 256 bytes and hence requires that this address value be broken into two parts, a 2 bit block number and an 8 bit offset. The block number is encode with a command byte as follows:

| EEPROM command byte | | | | | | | |
|---|---|---|---|---|---|---|---|
| 7 | 6 | 5 | 4 | 3 | 2 | 1 | 0 |
| 1 | 0 | 1 | 0 | 0 | A9 | A8 | 0 |

| EEPROM address byte | | | | | | | |
|---|---|---|---|---|---|---|---|
| 7 | 6 | 5 | 4 | 3 | 2 | 1 | 0 |
| A7 | A6 | A5 | A4 | A3 | A2 | A1 | A0 |

```
                    (Start)
                       |
                       |--| i2cSTOP  |
                       |  | i2cSTART |
                       |
                       |--| i2cWRITE(command) |
                       |  | i2cWRITE(address) |
                       |
                       |--| i2cSTOP |
                       |  | i2cSTART |
                       |
                       |--| i2cWRITE(command OR 0x01) |
                       |
                       |--| lo_byte = i2cREAD |
                       |  | hi_byte = i2cREAD |
                       |
                       |--| i2cSTOP |
                       |
                    (Stop)
```

Note that the "baseline", "range" and "offset" values are likely to be different for each customer depending on their geographical location and their AON/LOF requirements. The solar calculator software will generate an appropriate HEX file ready for programming into the EEPROM. Data within the EEPROM will be located as follows:

| | |
|---|---|
| unused | 0x3FF<br>:<br>0x2EB |
| sontrange2 | 0x2EA |
| soniranse1 | 0x2E8 |
| sontbaseline | 0x2E6 |
| softrange2 | 0x2E4 |
| softranae1 | 0x2E2 |
| softbaseline | 0x2E0 |
| unused | 0x2DF<br>:<br>0x2DB |
| sont/soft offsets | 0x2DA<br>:<br>0x000 |

The word values are stored in little endian format (LSB in lowest address).

**8 - Drive Relays**

The relay will normally be driven to the ON state if the current time is before sunrise or after sunset. The relay will also be driven on if the product is in factory test or lamp test (boost) mode.
Note that, to ensure correct relay operation on recovery from a power fail condition, the PSU must be allowed to settle for at least one second before an attempt is made to drive it to the ON state.

```
(Start)
 |
 |
 |--| IF power fail mode |
 |     |
 |   < >--| Relay OFF |
 |        |
 |        --| IF previous power fail mode <> FAILURE |
 |                |
 |              < >--| IF factory_test |
 |              |        |
 |              |      < >--( Do factory test )          (8.1)
 |              |             |
 |              |           --| IF (elapsed > SONT) AND |
 |              |             |    (elapsed < SONT) AND |
 |              |             |    (boost = 0)          |
 |              |                  |
 |              |                < >--| Relay OFF |
 |              |                       |
 |              |                     --| Relay ON |
 |              |
 |              --| NULL |
 |
(End)
```

## 8.1 — Factory Test

Factory test mode allows the product to exercise the relay during bum-in. Factory mode is enabled by sending an appropriate command to the product via the RS232 (see below). The variable "factory_test" is initialized with a value representing the period of time that the relay must toggle OFF and ON for. Another variable "ftcount" is also allocated this value but it is decremented by the one second interrupt routine, when it reaches zero the state of the relay is toggled.

```
(Start)
 |
 |
 |--| IF ftcount = 0 |
 |     |   |
 |   < >------| toggle state of relay |
 |     |   |      |
 |     |   |    --| ftcount = factory_test |
 |     |   |
 |     --| NULL |
 |
(End)
```

## 9 - Scan Test Button (and power fail input)

The test button is scanned at one second intervals. If it is found to be activated then lamp test mode is enabled and RS232 comms are enabled. Note that the current time is also sent to the RS232 module once per second but as the module is only enabled during lamp test mode it will only be available for inspection during that period. Note that the operator has the option of permanently enabling RS232 comms (and disabling them at a later point). The variable "boost" is decremented by the one second interrupt routine and while it is non zero the relay will be forced ON.

Note that the test button is actually an analog input and the voltage read from it is used to determine if a power fail has occurred as well as the status of the test button. See Appendix 5. Note that BOTH the flags "previous_pf_mode" and "pf_mode" will require to be set to POWEROKAY before the relay will be re-enabled, this will take two scans of the AN0 input and hence will allow the PSU at least one second to recover correctly.

```
(Start)
  |
  |--| IF one second elapsed |
  |   |   |
  |   < >-----| Print time |
  |   |   |
  |   |   |--| tbv = Read_Test_Button_Voltage |
  |   |   |
  |   |   |--| IF tbv > TESTBUTTONLIMIT |
  |   |   |     |
  |   |   |     < >-----| Enable RS232 |
  |   |   |     |   |
  |   |   |     |    --| boost = 300 |
  |   |   |     |
  |   |   |     |--| previous_pf_mode = pf_mode |
  |   |   |     |
  |   |   |      --| IF tbv < POWERFAILLIMIT |
  |   |   |            |
  |   |   |            < >--| pf_mode = POWERFAIL |
  |   |   |            |
  |   |   |             --| pf_mode = POWEROKAY |
  |   |   |
  |   |    --| IF boost = 0 AND NOT(rs232permanent) |
  |   |         |
  |   |         < >--| Disable RS232 |
  |   |         |
  |   |          --| NULL |                    .
  |   |
  |    --| NULL |
  |
(End)
```

**10 - Do Comms**

To conserve battery power the RS232 module is only enabled when the product is forced into lamp test mode by the operator pressing the test button, after 5 minutes lamp test mode terminates and the RS232 module is disabled unless it has been permanently enabled by a command from the operator. When the RS232 module is enabled any character that is received is placed in a buffer and when a <cr> character arrives a flag is set to indicate to the main program that the buffer should be processed; the first character in the buffer indicates the command type, upper and lower case characters are both accepted.

```
(Start)
  |
  |--| IF command received |
  |     |
  |    < >--| CASE rxbuffer[0] |
  |     |              |
  |     |   | T |--< >--| Set time value |
  |     |              |
  |     |   | D |--< >--| IF rxbuffer[1] is not <cr> |
  |     |              |           |
  |     |              |          < >--| Set date value |
  |     |              |           |
  |     |              |            --| Print date variables |
  |     |              |
  |     |   | X |--< >--| IF rxbuffer[1] is not <cr> |
  |     |              |           |
  |     |              |          < >--| Set crystal value |
  |     |              |           |
  |     |              |            --| Print crystal variable |
  |     |              |
  |     |   | M |--< >--| Print RTC error variables |
  |     |              |
  |     |   | S |--< >--| Print solar variables |
  |     |              |
  |     |   | F |--< >--| IF rxbuffer[1] = <cr> |
  |     |              |           |
  |     |              |          < >--| factory_test = ftcount = 0 |
  |     |              |           |
  |     |              |            --| Set factory test period |
  |     |              |
  |     |   | R |--< >--| IF rxbuffer[1] = '1' |
  |     |              |           |
  |     |              |          < >--| rs232permanent = TRUE |
  |     |              |           |
  |     |              |            --| IF rxbuffer[1] = '0' |
  |     |              |                 |
  |     |              |                < >--| Disable RS232 |
  |     |              |                 |
  |     |              |                  --| NULL |
  |     |
  |     --| NULL |
  |
(End)
```

### 10.1 - RS232 Commands

The software will respond to the following commands:

**T<hhmmss><cr> :** Set the current time

**D<ddmmyy><cr> :** Set the current date.

**D<cr> :** Print the calendar variables in the following order:

"daynumber"
"leapyear"

**X<sxx><cr> :** Set the crystal error. "s" is the sign and is optional for +ve values.

**X<cr> :** Print the crystal error.

**F<ff><cr> :** Sets the factory test period (rate at which relay will toggle Off and On)

**F<cr> :** Terminates factory test mode

**M<cr> :** Print the error correction variables in the following order:

    ''adcount"
    "adcsum"
    ''adcaverage"
    "ms_error"
    "total_error"

**S<cr> :** Print the solar variables in the following order:

    softbaseline
    softrange1
    softrange2
    sontbaseline
    sontrange1
    sontranae2

soft
sont

**R1<cr> :** Permanently enable RS232 mode

**R0<cr> :** Disable RS232 mode (press test button to re-enable)

**V<cr> :** Print the firmware revision number

### 10.2 — RS232 interrupt Routine

If the RS232 module is enabled and a character arrives an interrupt is generated. Received characters are buffered until a <cr> is received or the buffer fills up.

```
            (Start)
              |
              |
            |--| rxbuffer[rxptr] = RCREG |
              |
            |--| IF RCREG = <cr> |
              |   |
              |  < >--| rxdone = TRUE |
              |   |   | rxptr = 0     |
```

```
                    |      |
                    |      '--| IF rxptr < RXMAX |
                    |          |
                    |        < >--| rxptr++ |
                    |          |
                    |          '--| NULL |
                    |
                 (End)
```

## 11 — Real Time Clock

At one second intervals Timer0 will roll over from 0xFF to 0x00 and cause an interrupt. The interrupt handler is described below.

```
(Start)
 |
 |--| seconds++ |
 |
 |--| IF secs_correct |
 |    |
 |    < >--| IF seconds = 2 |
 |    |     |
 |    |     < >--| seconds += secs_correct |
 |    |     |    | secs_correct = 0        |
 |    |     |
 |    |     --| NULL |
 |    |
 |    --| NULL |
 |
 |--| IF seconds > 59 |
 |    |
 |    < >-----| seconds = 0     |
 |    |      | | minutes++       |
 |    |      | | elapsed++       |
 |    |      | | do _temp = TRUE |
 |    |      |
 |    |      --| IF minutes > 59 |
 |    |          |
 |    |          < >-----| minutes = 0        |
 |    |          |      | | hours++            |
 |    |          |      | | calc_average = TRUE |
 |    |          |      |
 |    |          |      --| IF hours > 59 |
 |    |          |          |
 |    |          |          < >-----| hours = 0        |
 |    |          |          |      | | elapsed = 0      |
 |    |          |          |      | | get_solar = TRUE |
 |    |          |          |      | | elapsed = 0      |
 |    |          |          |      |
 |    |          |          |      --| Process end of year variables |
 |    |          |          --| NULL |
 |    |          --| NULL |
 |    --| NULL |
 |



 |--| Set the one second flag |
 |
 |--| Decrement the test button counter |
 |
 |--| decrement the factory test counter |
 |
(End)
```

Note that the variable "secs_correct" will have a value of zero until more than 1000ms error have been accumulated, it will then be allocated a value of +/-1 depending on the sign of the error: the RTC is correct on the 2nd second and will either be incremented by a second or decremented by a second.

Once per minute the flag "do_temp" is set to indicate that a temperature reading should be performed by the main program.

Once per hour the flag "calc_average" is set to indicate that the average temperature should be calculated and the millisecond error for the past hour determined

Once per day the flag "get_solar" is set to indicate that a new pair of son/soft offsets should be read from the external EEPROM.

## 12 — Appendix 1 (External EEPROM programming)

The external EEPROM will be programmed from an automatically generated HEX file; each line of the HEX file will have the following format:

:<LL><AAAA><TT><data><CC>

Where,

<LL> is the number of data bytes
<AAAA> is the address
<TT> is the data type
<data> are the bytes of data
<CC> is the checksum

Where <TT> can have one of the following four values

**00**-data record
**01**-end-of-file record
**02**-extended segment address record (note used)
**04**-extended linear address record (not used)

The checksum is calculated using the following formula:

$$\text{checksum} = 100H - (\text{sum(all bytes after ":")} \text{ modulo } 100H)$$

e.g.

$$10H + 00H + 00H + 00H + C0H + A8H + \ldots\ldots + C0H + A8H = 693H$$

$$693H \text{ modulo } 256 = 93H$$

$$100H - 93H = 6DH$$

example file

```
;  EEPROM Locations start at 0xF00000
:0200000400F00A
:10000000C0A8000FFFFFFFF000004A3000000C0A86D
:020010000004EA

;  End of record
:00000001FF
```

Example of extended linear addressing for information only

## 13 — Appendix 2 (I2C Bus Operation)

A typical i2c bus sequence is shown in the following diagram.

During an i2cWRITE sequence 8 data bits are clocked out of the microcontroller to the EEPROM, a 9th clock pulse is used to obtain an ACK response from the EEPROM; this ACK will be a logic zero if the EEPROM has successfully received the byte of data.

During an i2cREAD sequence 8 data bits are clocked into the microcontroller from the EEPROM, a 9th clock pulse is used to send an ACK to the EEPROM, if the ACK is logic "1" then another read sequence is about to be executed (the EEPROM will auto-increment its address pointer); if the ACK is a logic "0" the microcontroller has completed it's operation.

The sequence of events to read a word from the EEPROM is shown in the following diagram.

## 14 — Appendix 3 (Development Environment)

### 14.1 — Source files

The following source files are required by the project:

| Filename | Description |
|---|---|
| 394-5000.C | This is the main source file and uses "#include" statements to access the other source files |
| 394-5001.C | This file contains the routines used to access the external EEPROM via the i2c bus |
| 394-5002.C | This file contains the millisecond error look-up table. NOTE that this file is normally automatically generated by the program "make_error_tabie.c" |
| 394-5003.C | This file contains the interrupt handlers for the RTC and RS232. |
| 394-5004.C | This file contains the routines used to access the internal EEPROM |
| 394-5005.C | This file contains the RS232 processing routines |
| 394-5000.H | This file contains definitions and constants |
| offsets.hex | This file is created by the solar calculator program and contains the sont and soft offsets and associated baseline/range parameters. This file is manually programmed into the external EEPROM. NOTE that this file is normally automatically generated by the program "solar_times???" |
| 16C73.H | This is the CCSC header file for 16C73 devices. These devices are code compatible with the target device |
| stdlib.H | This is the CCSC header file that contains definitions for some math functions used by the source code. |
| **The project source code is only compatible with the CCSC PCM compiler.** | |
| **Note that although the target device is a PIC16F688 the source code is configured to compile for a 16C73; this device is code and memory compatible with the target.** | |

### 14.2 — *Fuse Configuration*

The PIC configuration can be fixed by setting a number of bits in a special register located at word address 0x2007.

The register has the following format:

| Configuration Register (0x2007) | | | | | | | | | | | | | |
|---|---|---|---|---|---|---|---|---|---|---|---|---|---|
| 13 | 12 | 11 | 10 | 9 | 8 | 7 | 6 | 5 | 4 | 3 | 2 | 1 | 0 |
| X | X | FCMN | IESO | BOD1 | BOD0 | CPD\ | CP\ | MCLR | PUT\ | WDE | OSC2 | OSC1 | OSC0 |
| 0 | 0 | 0 | 0 | 0 | 0 | 1 | 1 | 1 | 0 | 0 | 0 | 0 | 0 |

```
FCMEN           Fail-safe clock monitor enable (0)
IESO            Internal/External switch-over (0)
BOD1..BOD0      Brown-out detect (00)
CPD\            Internal EEPROM protect enable (1)
CP\             Code protect enable (1)
MCLR            Reset pin mode (1)
PUT\            Power-up timer enable (0)
WDE             Watchdog timer enable (0)
OSC2..OSC0      Oscillator mode - LP crystal (000)
```

The configuration register is set in the source code using the following statement:

    #org 0x2007 = 0x0E0

## 15 — Appendix 4 (Internal Data EEPROM Programming)

The first byte in the internal EEPROM will be reserved for the crystal calibration value that will be determined during factory testing, see section 3 above.

The PIC's internal EEPROM is located at word address 0x2100 and is 256 words long, however only the lower 8 bits of each word are readable by the software. Note that the physical addresses of the EEPROM cannot be accessed by the software and an indirection registers must be employed to read/write data; see below.

### 15.1 — Programming the EEPROM

The internal data EEPROM is located at word address 0x2100 however prom programmers typically use byte address, hence when a HEX file is created to program the EEPROM a base address of 0x2100 * 2 = 0x4200 must be used. i.e.

| word address 0x217F | byte address 0x42FF | MSB not used |
| | byte address 0x42FE | LSB |
| word address 0x217E | byte address 0x42FD | MSB not used |
| | byte address 0x42FC | LSB |
| : | : | |
| : | : | |
| word address 0x2101 | byte address 0x4203 | MSB not used |
| | byte address 0x4202 | LSB |
| word address 0x2100 | byte address 0x4201 | MSB not used |
| | byte address 0x4200 | LSB |

The crystal offset value to be programmed will be in the range +/-100ms/hr represented as a twos compliment 8 bit number. The HEX file to program the crystal offset will be of the following format:

    :02420000XX00CC
    Where XX is the twos compliment crystal offset value
    and CC is the checksum.
    e.g. Assume the crystal offset is -67ms/hr = 0xBD in twos compliment

$$\begin{aligned} \text{checksum} &= 0x100 - (\text{sum of all bytes after ``:'' MOD } 0x100) \\ &= 0x100 - (0x02 + 0x42 + 0x00 + 0x00 + 0xBD + 0x00) \text{ MOD } 0x100 \\ &= 0x100 - 0x101 \text{ MOD } 0x100 \\ &= 0xFF \end{aligned}$$

    **:02420000BD00FF**

Note that, although not strictly necessary, a word value with the MSB set to 0x00 is programmed.

### 15.2 - Reading data from the internal EEPROM

The internal data EEPROM is accessed via an indirection register called EEADR which is special function register (SFR) 0x9B; this register holds the 8 bit offset into the 256 byte EEPROM space, data from the EEPROM is available in SFR EEDAT (0x9A) and a read cycle is enabled by setting the RD bit in SFR EECON1 (0x9C).
The EECON 1 register bits are defined as follows:

| EECON1 (0x9C) | | | | | | | |
|---|---|---|---|---|---|---|---|
| 7 | 6 | 5 | 4 | 3 | 2 | 1 | 0 |
| EEPGD | X | X | X | WRERR | WREN | WR | RD |

EEPGD = 1 : Read program memory
EEPGD = 0 : Read EEPROM data memory
X : Three unused bits
WRERR = 0 : Write error flag (not used)
WREN = 0 : Write enable flag (not used)
WR = 0 : Perform write (not used)
RD = 1 : Perform read cycle

e.g.

```
#byte EEDAT = 0x9A
#byte EEADR = 0x9B
#byte EECON1 = 0x9C
unsigned char result;

EEADR = 0;
EECON1 = 0;
bit_set(EECON1,0);
result = EEDAT;
bit_clear(EECON1,0) ;
```

### 15.3 — Firmware Revision Number

**[0164]** The revision of the firmware is stored in EEPROM offset 0x01..0x04 in the format:

VX.Y

where X.Y is the major and minor revision numbers e.g. V0.4

### 15.4 — Watchdog timer and fault recovery

The watchdog timer is employed to recover the processor operation in the event of a software run-away, whether this is due to a code fault or external influence.
To allow for a degree or normal operation after a watchdog reset the current date and time will be saved to internal EEPROM at one minute intervals, this will allow a roll-back to the last known minute boundary. This will result in a time keeping error of up to one minute but this is preferable to using an arbitrary default time.
The date and time variables will be stored in EEPROM locations 0x05..0x09; note that the "daynumber" variable requires to be 16 bit.

| Location | Usage |
|---|---|
| 0x05 | daynumber_LO |

(continued)

| Location | Usage |
|----------|-------|
| 0x06 | daynumber_HI |
| 0x07 | leapyear |
| 0x08 | mins |
| 0x09 | hour |

The watchdog timer uses an independent 31kHz on-board oscillator, this is passed through a divide by 65536 pre-scalar resulting in a watchdog timeout period of approximately 2.2 seconds. The watchdog timer is reset regularly in the main polling loop.

Such that the frequency test can be performed correctly in the factory the watchdog timer is initially disabled by clearing bit 0 in WDTCON, after the frequency test the WDT is enabled by setting this bit. NOTE THAT if the WDT fuse bit in the configuration register is set to ENABLE the watchdog then this will override the software enable/disable function; hence it is important that the fuse bit is set to DISABLE mode.

After a watchdog (or power-on) reset occurs the software will read the last know date/time from the internal EEPROM, if these values are numerically realistic then they are used as the RTC re-start point: if any of them are invalid (e.g. hour > 23) then a set of defaults are used.

### 15.5 - Writing data to the internal EEPROM

The internal data EEPROM is accessed via an indirection register called EEADR which is special function register (SFR) 0x9B; this register holds the 8 bit offset into the 256 byte EEPROM space, data to be saved in the EEPROM must be placed in SFR EEDAT (0x9A).

An internal EEPROM write cycle is more complex than the read cycle described in 15.2 above. For data integrity reasons a well defined code sequence must be executed. The actual write cycle will take approximately 6ms to execute plus software overheads.

The following code fragment shows the write cycle sequence.

```
    :
    :
EECON1 = 0;                      //default value

EEADR = addr;              //set the EEPROM offset
EEDAT = data;              //set the data to be written

bit_set(EECON1,2);         //enable writes
disable_interrupts(GLOBAL);   //disable interrupts
EECON2 = 0x55;             //write sequence flag #1
EECON2 = 0xAA;             //write sequence flag #2
bit_set(EECON1,1);         //start write cycle
```

```
enable_interrupts(GLOBAL);      //re-enable interrupts

while(bit_test(EECON1,1));      //wait  for  write  cycle  to
execute

EECON1 = 0;                     //default value
:
:
```

**16 ── Appendix 5 (Power Fail Detection)**

The electrical configuration of the PSU is such that the relay may not adopt it's correct state on recovery from a power fail if it is required to be ON.

This problem is cured by allowing the PSU to reach it's working voltage prior setting the relay to the ON state. To achieve this it is necessary to monitor the power supply voltage and detect entry to, and exit from, a power fail state. As the I/O capability of the chosen microcontroller is very limited the input used to monitor the PSU voltage is also used to monitor the test button. The following electrical configuration is used:

If the PSU voltage is at its nominal value of 4.7V then the voltage at AN0 will be half this value namely 2.35V due to the action of the voltage divider. If the mains supply fails the PSU voltage and hence the voltage at AN0 will drop to 0V. If the test button is pressed then the voltage on AN0 will be Vdd regardless of the PSU voltage.

The AN0 input is scanned at one second intervals and its voltage used to set a number of flags that are used to control system operation.

### 16.1 - Entry to Power Fail Mode

If the voltage on AN0 is found to be below a particular value a flag is set to indicate that a power fail has occurred, the routine that controls the relay (see section 8) will set it to the OFF state regardless of the RTC and the SONT/SOFT values.

### 16.2 - Recovery from Power Fail

If the voltage on AN0 is found to be approximately mid range then the power supply must be recovering from a power fail and the flag is set appropriately. However the relay control routine will not set the relay to the ON state (if that is what is required) until the power supply has been valid for at least one second: this delay allows the PSU to achieve its proper working state prior to attempting to energize the relay. This delay is introduced by maintaining a pair of flags (a double buffer), one of which tracks the previous state of the PSU, both flags must be set TRUE (which will require two scans of the input voltage at one second intervals) before the relay is energized.

**Claims**

1. A lamp control unit, which is programmable to operate in accordance with a user's requirements, the lamp control unit comprising:

   power supply means operable to provide electrical power for operation of the lamp control unit,
   lamp actuating means operable to actuate at least one lamp to which the lamp control unit can be electrically coupled, and
   a programmable controller operable to control the lamp actuating means according to a stored cyclical pattern, the cyclical pattern being related to at least one of a sunrise time and a sunset time, the lamp control unit being configured for programming of the programmable controller with the cyclical pattern in accordance with the user's requirements,
   in which the lamp control unit lacks field operable programming means for programming the programmable controller with the cyclical pattern and the lamp controller is further configured for programming of the programmable controller with the cyclical pattern within a factory environment.

2. The lamp control unit of claim 1 further comprising programming means in data communication with the programmable controller, the programming means being configured to receive programming data corresponding to the cyclical pattern to be stored in the programmable controller.

3. The lamp control unit of claim 2 in which the programming means comprises a plurality of electrical connections accessible in the factory environment.

4. The lamp control unit of claim 3 where electrical circuitry of the lamp control unit comprises a printed circuit board, the plurality of electrical connections are constituted as respective solder connections on the printed circuit board.

5. The lamp control unit of claim 4 in which the lamp control unit is programmable by bringing the printed circuit board into engagement with a so-called bed of nails by mean of which the programming data can be conveyed for storage as the cyclical pattern.

6. The lamp control unit of any of claims 2 to 5 in which the programming means comprises a programming port in data communication with the programmable controller, the programming port being configured to receive programming data corresponding to the cyclical pattern to be stored in the programmable controller.

7. The lamp control unit of any preceding claim in which the programmable controller is configured to control the lamp actuating means solely in dependence upon the stored cyclical pattern.

8. The lamp control unit of any preceding claim in which the lamp control means comprises field test means configured to allow a user to test the operation of the lamp control unit.

9. The lamp control unit of claim 8 in which the field test means is configured to allow a user to initiate execution of the stored cyclical test pattern by the lamp control unit.

10. The lamp control unit of claim 8 or 9 in which the field test means is a sole means of control of the lamp control unit by a user in the field.

11. The lamp control unit of any preceding claim in which the programmable controller is configured to be solely programmable within a factory environment.

12. The lamp control unit of any preceding claim in which the lamp control unit comprises a re-programmable data store for storing the cyclical pattern.

13. The lamp control unit of any preceding claim in which the programmable controller is programmable with the cyclical pattern on the basis of a latitude and longitude of intended operation of the lamp control unit.

14. The lamp control unit of any preceding claim in which the lamp control unit is configured such that operation of the programmable controller according to the stored cyclical pattern is in dependence upon a time variation of at least one of a sunrise time and a sunset time over a predetermined time period.

15. The lamp control unit of claim 14 in which the lamp control unit is configured to store a plurality of times of at least one of sunrise times and sunset times, the plurality of times corresponding to times on different respective days during the predetermined time period.

16. The lamp control unit of any preceding claim in which the programmable controller is programmable to provide for a variation in a time of control of the lamp actuating means, the time of control being related to the at least one of the sunrise time and the sunset time.

17. The lamp control unit of any preceding claim in which the programmable controller is programmable to provide for a variation in a level of a signal provided by the lamp actuating means for actuation of the at least one lamp coupled to the lamp control unit.

18. The lamp control unit of claim 17 in which the programmable controller is configured to vary the level of the signal during execution of the cyclical pattern.

19. The lamp control unit of any preceding claim in which the programmable controller is programmable for different lengths of cyclical pattern.

20. The lamp control unit of any preceding claim further comprising clock means, which is operable with the programmable controller to execute the cyclical pattern, and a temperature sensor configured to measure an ambient temperature and the clock means is configured to provide a time output in dependence upon a measured ambient temperature.

21. The lamp control unit of claim 20 configured to correct the time output of the clock means in dependence upon a predetermined variation in an output of the clock means over temperature and a change in ambient temperature.

22. The lamp control unit of claim 21 configured to repeatedly measure the ambient temperature until at least a predetermined time error has been reached before the time output of the clock is corrected.

23. The lamp control unit of any preceding claim in which the lamp control unit further comprises at least one of a DIN connection and a National Electrical Manufacturers Association (NEMA) connection though which the lamp actuating means can actuate the at least one lamp.

24. A lighting system comprising a lamp control unit according to any preceding claim.

25. A method of programming a lamp control unit in accordance with a user's requirements, the lamp control unit comprising power supply means operable to provide electrical power for operation of the lamp control unit, lamp actuating means operable for actuation of at least one lamp to which the lamp control unit can be electrically coupled and a programmable controller operable to control the lamp actuating means according to a stored cyclical pattern, which is related to at least one of a sunrise time and a sunset time, the method comprising:

   programming the programmable controller with the cyclical pattern in accordance with the user's requirements, in which the lamp control unit lacks field operable programming means for programming the programmable controller with the cyclical pattern and the lamp controller is further configured such that the step of programming of the programmable controller is carried out within a factory environment.

Figure 1

Figure 2

LOAD

_50_

TEST

52

54

52

MAINS IN

Figure 3a

Figure 3b

_50_

figure 4

**European Patent Office**

**EUROPEAN SEARCH REPORT**

Application Number

EP 05 25 3637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/31201 A (SEO, DAL, HEE) 16 July 1998 (1998-07-16)<br><br>* page 3, line 18 - page 5, line 19; figure 1 * | 1-3,6,7, 11,12, 14-16, 19,24,25 | H05B37/02 |
| Y | US 5 936 362 A (ALT ET AL) 10 August 1999 (1999-08-10) * column 2, line 44 - column 13, line 42; figures 1-7 * | 1-25 | |
| Y | US 2002/010518 A1 (REID DREW A ET AL) 24 January 2002 (2002-01-24) * paragraphs [0002], [0007], [0157], [0184], [0185], [0508] * | 1-25 | |
| Y | US 6 160 353 A (MANCUSO ET AL) 12 December 2000 (2000-12-12) * column 2, lines 20-23 * * column 6, line 33 - line 48; figure 10 * | 17,18 | TECHNICAL FIELDS SEARCHED (IPC) |
| A | US 4 587 417 A (DUVE ET AL) 6 May 1986 (1986-05-06) * abstract; figure 1 * | 1,25 | H05B |
| A | US 5 160 853 A (SIMON ET AL) 3 November 1992 (1992-11-03) | | |
| A | WO 96/27823 A (A. AHLSTROM CORPORATION; ROSTEDT, JAN) 12 September 1996 (1996-09-12) | | |

The present search report has been drawn up for all claims

| Place of search | Date of completion of the search | Examiner |
|---|---|---|
| The Hague | 1 December 2005 | Albertsson, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 05 25 3637

This annex lists the patent family members relating to the patent documents cited in  the above-mentioned European search report.
The members are as contained in the European Patent Office EDP file on
The European Patent Office is in no way  liable for these particulars which are merely  given for the purpose of information.

01-12-2005

| Patent document cited in search report | | Publication date | Patent family member(s) | | Publication date |
|---|---|---|---|---|---|
| WO 9831201 | A | 16-07-1998 | NONE | | |
| US 5936362 | A | 10-08-1999 | NONE | | |
| US 2002010518 | A1 | 24-01-2002 | CA | 2337728 A1 | 25-08-2001 |
| | | | FR | 2805621 A1 | 31-08-2001 |
| | | | MX | PA01001914 A | 17-02-2004 |
| US 6160353 | A | 12-12-2000 | US | 5962982 A | 05-10-1999 |
| US 4587417 | A | 06-05-1986 | NONE | | |
| US 5160853 | A | 03-11-1992 | NONE | | |
| WO 9627823 | A | 12-09-1996 | AT | 205943 T | 15-10-2001 |
| | | | DE | 69615407 D1 | 25-10-2001 |
| | | | DE | 69615407 T2 | 20-06-2002 |
| | | | DK | 879442 T3 | 21-01-2002 |
| | | | EP | 0879442 A1 | 25-11-1998 |
| | | | ES | 2165973 T3 | 01-04-2002 |
| | | | FI | 97652 B | 15-10-1996 |

EPO FORM P0459

For more details about this annex : see Official Journal of the European Patent Office, No. 12/82